# EUROPEAN PATENT SPECIFICATION

(11) **EP 2 746 336 B1**
(45) Date of publication and mention of the grant of the patent: **12.04.2017**
(21) Application number: 12198501.4
(22) Date of filing: 20.12.2012
(51) Int. Cl.: F16L 9/127, C08L 23/12, C08L 23/14

(54) **Polypropylene blend for pressure pipes**
Polypropylen-Gemisch für Druckleitungsrohre
Mélange de polypropylène pour conduits sous pression

(43) Date of publication of application: 25.06.2014
(73) Proprietor: Borealis AG, 1220 Vienna (AT)
(72) Inventor: Reichelt, Kristin, 4501 Neuhofen/Krems (AT); Stubenrauch, Kurt, 4222 St. Georgen an der Gusen (AT); Braun, Hermann, 4040 Linz (AT); Boragno, Luca, 4040 Linz (AT)
(74) Representative: Lux, Berthold

(56) References cited:
- EP-A1- 2 230 273
- US-A1- 2009 111 945

## Description

The present invention relates to a polypropylene blend comprising a propylene copolymer as component (A) and a propylene homo- or copolymer as component (B). The polypropylene blend of the present invention is not (β-nucleated. The present invention also relates to the use of the polypropylene blend for the manufacture of pipes as well as to pipes comprising the polypropylene blend.

WO 00/11077 discloses a polypropylene composition said to be useful for making solid state oriented films. The composition comprises two predominantly isotactic propylene homopolymers with different melting points, MFR values and tacticities. The higher melting point polypropylene may be made by Ziegler-Natta catalysis, while the lower melting point polypropylene may be made by metallocene catalysis.

WO 03/037981 relates to a polypropylene composition for pipes comprising (parts by weight): 1) 100 parts of a crystalline random copolymer of propylene with 1-15 wt% of a C₄-C₁₀ α-olefin or a crystalline random copolymer of propylene with 1-15 wt% C₄-C₁₀ α-olefin and with 1-7 wt% of ethylene; 2) 0 to 70 parts of an elastomeric polyolefin selected from the group consisting of: (a) a copolymer of ethylene with propylene and, optionally a diene, having an ethylene content of from 17 to 45 wt% and an propylene content from 55 to 83 wt%; or (b) a copolymer of ethylene with a C₃-C₁₀ α-olefin having an ethylene/C₃-C₁₀ α-olefin weight ratio of from 29 to 86 wt% (¹³C-NMR analysis) and having an M*_{w}*/M*ₙ* ratio of less than 3.5; and 3) 0-30 parts of a polymer of ethylene having a melting temperature over 120°C and intrinsic viscosity of from 2 to 6 dl/g. When the elastomeric polyolefin is present, the polymer of ethylene is at least 12 parts based on 100 parts of the random polypropylene. Pipes produced from the composition are said to have improved burst pressure performance (creep resistance) in combination with good stiffness and impact properties.

WO 98/30629 discloses a propylene polymer composition which is said to have a good balance between rigidity and impact resistance suitable for films or pipes. The propylene polymer composition comprises two fractions (A) and (B), wherein fraction A is comprised in an amount of 10-90 wt%, and is a propylene copolymer with a C₄-C₂₀ α-olefin, has a MFR₂ (230°C) of 0.001-8 g/10 min, a Tₘ of 95-145°C and a density 885-905 kg/m³. Fraction B is comprised in an amount of 90-10 wt%, and is a propylene homopolymer or copolymer with C₄-C₂₀ α-olefin, has a MFR₂ (230°C) of 0.1-600 g/10 min, a Tₘ of 147-170°C and a density 905-916 kg/m³.

WO 2005/040271 relates to a polypropylene pressure pipe comprising a resin formed from 70 to 90 wt% of a random copolymer comprising propylene and from 0.2 to 5 wt% of units of a C₂-C₁₀ α-Olefin, having an MFR of 0.1-5 g/10min; 10 to 30 wt% of an elastomer comprising propylene and from 30 to 55 wt% of units of ethylene, wherein the MFR of the resin is from 0.1 to 2 g/10mins.

WO 2008/077773 describes a polymeric composition for pipe systems and sheets. The polymeric composition is a polyolefin composition comprising: 1) 10-60 wt% of a copolymer of propylene and hexene-1 wherein said copolymer comprises from 0.2 to 10 wt% of recurring units derived from hexene-1; and 2) 10-85 wt% of a propylene polymer selected from propylene homopolymer and a polymer of propylene with 0.1-10 wt% of an α-olefin selected from ethylene, a C₄-C₁₀ α-olefin, hexene-1 excluded, and a mixture thereof, wherein the propylene polymer is insoluble in xylene at ambient temperature in an amount over 85% and has a polydispersity index ranging from 3 to 20; and 3) 5-30 wt% of a copolymer of ethylene with a C₃-C₁₀ α-olefin and optionally a diene, having an ethylene content ranging from 15 to 60 wt% and an intrinsic viscosity value of at least 1 dl/g.

US2009/111945 discloses a homogeneous blend composition comprising a first propylene copolymer and a second propylene homo- or copolymer. The first copolymer has a MFR of greater than 250 g/10 min.

Polypropylene resins suitable for pipe application are usually produced with Ziegler-Natta catalysts in a multimodal process in order to produce a high M*_{w}* fraction in view of sufficient creep properties and a broad molecular weight distribution MWD (i.e. a high polydispersity index PI) in view of better extrudability.

On the other hand, metallocene catalysts inherently produce narrow MWD and their capability to produce polypropylenes having a very low MFR at acceptable activity is limited, and therefore the final properties of metallocene based polypropylenes are not able to fulfil desired properties in the terms of extrudability, pressure resistance and creep properties. Using metallocene catalysts for the incorporation of comonomers such as hexene into the polypropylene, however, has advantages over Ziegler-Natta catalysis in terms of the amount of comonomer to be incorporated and the comonomer distribution.

The present inventors have found that a combination of different polypropylene materials offers surprisingly interesting features for pipe applications. Therefore, the present invention provides a polypropylene blend comprising a component (A) being a propylene copolymer and a component (B) being a different propylene homo- or copolymer. The use of β-nucleation is not necessary and is not employed according to the present invention. In one embodiment, component (A) has 2,1 regio-defects of more than 0.4% and component (B) has 2,1 regio-defects of 0.4% or less determined by ¹³C-NMR spectroscopy. In an alternative embodiment, component (A) is produced with a single site catalyst system such as a metallocene catalyst system and component (B) is produced with a Ziegler-Natta catalyst system. Component (A), typically having a higher MFR, contributes through the controlled polymer structure to creep resistance of the polypropylene blend. Component (B), typically having a lower MFR and a higher high molecular weight also positively influences creep resistance, as well as a broad molecular weight distribution necessary for process ability.

The present inventors surprisingly found that pipes formed from the inventive polypropylene blend show clearly improved pressure resistance compared with commercial reference grades such as propylene homopolymer or propylene random copolymer. The present invention advantageously balances and combines the advantages contributed by component (A) and component (B). Especially pressure resistance particularly at higher temperatures of pipes formed from the inventive polypropylene blend is significantly improved. These results surprisingly can be achieved even without the use of nucleation technology especially without β-nucleation.

Accordingly, the present invention relates in one embodiment to a polypropylene blend comprising:
(a) Component (A) being a copolymer of propylene and a C₄-C₁₂ α-olefin, and having 2,1 regio-defects, especially 2,1 erythro regio-defects, of more than 0.40 % determined by ¹³C-NMR spectroscopy, wherein component (A) has an MFR₂ at 230°C according to ISO 1133 of 0.25 to 10 g/10 min, and
(b) Component (B) being a propylene homo- or copolymer having 2,1 regio-defects especially 2,1 erythro regio-defects, of 0.40 % or less determined by ¹³C-NMR spectroscopy,
wherein the polypropylene blend is not β-nucleated.

In an alternative embodiment, the present application relates to a polypropylene blend comprising:
(a) Component (A) being a copolymer of propylene and a C₄-C₁₂ α-olefin made with a single site catalyst system, and
(b) Component (B) being a propylene homo- or copolymer made with a Ziegler-Natta catalyst,
wherein the polypropylene blend is not β-nucleated.

The present invention also relates to the use of the above polypropylene blend for the manufacture of pipes such as single layer pipes or one layer of a multilayer pipe.

The present invention also covers pipes comprising the above polypropylene blend. These pipes typically show a pressure test performance measured according ISO 1167 of:
(a) at least 400 h at 5 MPa and 95°C (pipe diameter 32mm; wall thickness 3mm), preferably at least 900 h and/or
(b) at least 6000 h at 3.5 MPa and 95°C (pipe diameter 32mm; wall thickness 3mm), and/or
(c) at least 3000 h at 16 MPa and 20°C (pipe diameter 32mm; wall thickness 3mm).

Further embodiments of the present invention are described in the following detailed description and the dependent claims.

### Component (A)

The polypropylene blend according to the present invention comprises as one essential fraction a propylene copolymer as component (A). The propylene copolymer as component (A) is a propylene copolymer having 2,1 regio-defects, especially 2,1 erythro regio-defects, of more than 0.40 % determined by ¹³C-NMR spectroscopy.

The term "regio defects" defines the sum of 2,1 erythro regio-defects, 2,1 threo regio-defects and 3,1 isomerisation regio-defects. The term "2,1 regio defects" defines the sum of 2,1 erythro regio-defects and 2,1 threo regio-defects. Wherever in the instant invention the amount of regio defects are given as an average percentage with respect to all inserted propene i.e. the sum of all 1,2, 2,1 and 3,1 inserted propene units in the polymer chain. Isolated, i.e. non-end group related, regio-defects in polypropylenes can be of three different types, namely 2,1-erythro (2,1e), 2,1-threo (2,1t) and 3,1 isomerisation regio-defects. A detailed description of the structure and mechanism of formation of regio-defects in polypropylene can be found in Chemical Reviews 2000,100(4), pages 1316-1327. Polypropylenes having such regio-defects may be prepared e.g. by using an isospecific, *C*₂-symmetric metallocene catalyst to provide a different microstructure compared to polypropylenes prepared by using Ziegler-Natta (ZN) catalysts. The presence of such regio-defects may typically be used to identify a polypropylene as produced with a metallocene catalyst. The most common regio-defect, present in almost all isotactic polypropylenes produced with highly isospecific metallocene catalysts, is the 2,1e defect.

By introducing defects into the polymer chain, such as comonomers, stereo-errors or regio-defects, the physical properties of polypropylene can be modified. In particular, by increasing the amount of chain defects, crystallinity and melting point of polypropylene can be reduced. Such chain defects can be introduced by copolymerization (introducing comonomer units in the chain) or by modifying the chemical structure of the catalyst (that is, modifying its selectivity) in order to allow more stereo- or regio-defects to be formed during polymerization.

Thus, alternatively the propylene copolymer as component (A) can be defined as a propylene copolymer made with a single site catalyst system.

Single site catalyst systems are known in the art and are described herein. Single site catalyst systems may e.g. comprise a metallocene catalyst.

In a preferred embodiment, the propylene copolymer as component (A) having 2,1 regio-defects, especially 2,1 erythro regio-defects, of more than 0.40 % is made with a single site catalyst system, e.g. with a metallocene catalyst.

Furthermore, it is preferred that the propylene copolymer as component (A) has 2,1 erythro regio-defects of more than 0.40 % determined by ¹³C-NMR spectroscopy. Still more preferably, the propylene copolymer as component (A) has 2,1 regio-defects, especially 2,1 erythro regio-defects, of 0.60 % or more, more preferably has 2,1 regio-defects, especially 2,1 erythro regio-defects, of 0.70 % or more.

The propylene copolymer as component (A) has an MFR₂ at 230°C according to ISO 1133 of 0.25 to 10.0 g/10min, 0.5 to 9.0 g/10min, or 1.0 to 8.0 g/10min.

Preferably the propylene copolymer as component (A) has melting temperature (Tₘ) measured according to ISO 11357-3 in the range of 125 to 160 °C, more preferably in the range of 128 to 155 °C, still more preferably in the range of 135 to 155 °C, still yet more preferably in the range of 135 to 160 °C, like in the range of 140 to 155 °C

Additionally the propylene copolymer as component (A) can be defined by the xylene cold soluble (XCS) content. Accordingly the propylene copolymer as component (A) is preferably featured by a xylene cold soluble (XCS) content of below 25.0 wt.-%, more preferably of below 22.0 wt.-%, yet more preferably equal or below 20.0 wt.-%, still more preferably below 16.0 wt.-%. Thus it is in particular appreciated that the propylene copolymer as component (A) has a xylene cold soluble (XCS) content in the range of 0.5 to 25.0 wt.-%, more preferably in the range of 0.5 to 20.0 wt.-%, yet more preferably in the range of 0.5 to 16.0 wt.-%.

The amount of xylene cold soluble (XCS) additionally indicates that the propylene copolymer as component (A) is preferably free of any elastomeric polymer component, like an ethylene propylene rubber. In other words the propylene copolymer as component (A) shall be not a heterophasic polypropylene, i.e. a system consisting of a polypropylene matrix in which an elastomeric phase is dispersed. Such systems are featured by a rather high xylene cold soluble content. Accordingly in a preferred embodiment the propylene copolymer as component (A) is a semi-crystalline polymer and monophasic, i.e. no different phases are for instance visible by high resolution microscopy, like electron microscopy or scanning force microscopy.

Component (A) is a propylene copolymer comprising propylene units and units of comonomer. Suitable comonomers include a C₄ to C₁₂ α-olefin.

This polypropylene copolymer as component (A) may be a copolymer which contains 90.0 to 99.8 mol%, preferably 94.0 to 99.8 mol%, more preferably 95.5 to 99.8 mol% of propylene and 0.2 to 10 mol%, preferably 0.2 to 6.0 mol%, more preferably 0.2 to 4.5 mol% of one or more of a C₄ to C₁₂ α-olefin, preferably linear C₄ to C₁₂ α-olefin. More preferably, the comonomers of component (A) are selected from C₄ to C₁₀ α-olefins, like linear C₄ to C₁₀ α-olefins, still more preferably from C₄ to C₈ α-olefins, like linear C₄ to C₈ α-olefins, yet more preferably from C₄ to C₆ α-olefins, like linear C₄ to C₆ α-olefins, such as 1-butene or 1-hexene.

In a further preferred embodiment, component (A) has a comonomer content of 1.0 mol% or more, preferably of 1.5 mol% or more, more preferably of 2.0 mol% or more. The upper limit of the amount of comonomers is preferably 6.0 mol% or less, more preferably 4.5 mol% or less, still more preferably 3.0 mol% or less. Accordingly it is preferred that the component (A) has a comonomer content in the range of 1.0 to 6.0 mol%, more preferably in the range of 1.5 to 4.5 mol%, yet more preferably in the range of 2.0 to 3.0 mol%.

The C₄ to C₁₂ α-olefin is preferably selected from 1-butene, 1-pentene, 1-hexene, 4-methyl-1-pentene and 1-octene. Particularly preferred is 1-butene or 1-hexene, especially 1-hexene.

Thus preferred comonomers are 1-butene and 1-hexene or mixtures therefrom.

However, it is more preferred that the propylene copolymer does not comprise further comonomer(s), e.g. 1-hexene or 1-butene is the only comonomer of the propylene copolymer (binary propylene-hexene or propylene-butene copolymer).

The binary propylene-1-hexene copolymer is particularly preferred.

As stated above, the one comonomer like e.g. 1-hexene is mandatory whereas other α-olefins can be additionally present. However the amount of additional α-olefins shall preferably not exceed the amount of the mandatory comonomer in the propylene copolymer of component (A). Preferably, no other comonomers apart from the C₄ to C₁₂ α-olefins described above are present in the propylene copolymer of component (A). Still more preferably the propylene copolymer of component (A) is a propylene copolymer with one comonomer selected from the group consisting of 1-butene, 1-pentene, 1-hexene, 4-methyl-1-pentene and 1-octene. Particularly preferred is 1-butene or 1-hexene. Especially preferred the propylene copolymer of component (A) is a propylene-hexene copolymer. Such a propylene copolymer as defined in this paragraph, preferably a propylene copolymer with just one further comonomer, has a comonomer content of 1.0 mol% or more, preferably of 1.5 mol% or more, more preferably of 2.0 mol% or more. The upper limit of the amount of comonomer in the propylene copolymer, preferably in the propylene copolymer with just one further comonomer, is preferably 6.0 mol% or less, more preferably 4.5 mol% or less, still more preferably 3.0 mol% or less. Accordingly it is preferred that the component (A) as a propylene copolymer with just one further comonomer has a comonomer content, especially 1-hexene content, in the range of 1.0 to 6.0 mol%, more preferably in the range of 1.5 to 4.5 mol%, yet more preferably in the range of 2.0 to 3.0 mol%.

More preferably the above defined propylene copolymer of component (A) consists of only isolated comonomer incorporation. Thus the propylene copolymer according to the present invention has a random comonomer distribution of units of α-olefin as described above, such as 1-hexene or 1-butene if present with units of a second α-olefin, as defined above, to give a random terpolymer.

Additionally, it is preferred that the propylene copolymer of component (A) is an isotactic propylene copolymer. Thus it is preferred that the propylene copolymer has a low content stereo defects and thus a rather high triad isotacticity, i.e. [mm] higher than 94%, more preferably higher than 95%, still more preferably higher than 97% and yet more preferably higher than 99%.

Moreover, the propylene copolymer of component (A) can be unimodal or multimodal, like bimodal. In one embodiment the propylene copolymer of component (A) is bimodal.

The modality of the propylene copolymer of component (A) can refer to the amount of comonomer weight distribution and/or in the bimodal molecular weight distribution in the individual polymer chains. Preferably the propylene copolymer component (A) is multimodal, more preferably bimodal, in the comonomer, like 1-hexene, weight distribution. As will be explained below, the polymer components of the present invention can be produced in a sequential step process, using reactors in serial configuration and operating at different reaction conditions. As a consequence, each fraction prepared in a specific reactor may have its own comonomer content, e.g. 1-hexene content, wherein the comonomer content, e.g. hexene content, of each fraction may be different from each other. Such a polymer, produced in two or more serial steps, is called bimodal or multimodal, depending on the number of steps.

In one embodiment, the propylene copolymer of component (A) is at least a bimodal propylene copolymer, more preferably is a bimodal propylene copolymer, comprising a first fraction being the comonomer lean fraction and a second fraction being the comonomer rich fraction. In other words it is preferred that the comonomer content of the first fraction is lower than the comonomer content of the second fraction. Thus it is preferred that the comonomer, like 1-hexene, content between the first fraction and the second fraction differ by at least 1.5 mol%, more preferably by at least 2.0 mol%, still more preferably differ from 1.0 to 5.0 mol%, yet more preferably differ from 1.5 to 4.5 mol%, like from 2.0 to 4.0 mol%.

Thus, in one embodiment, the propylene copolymer of component (A) is at least a bimodal propylene copolymer, more preferably is a bimodal propylene copolymer, comprising a first fraction having a content of C₄-C₁₂ α-olefins, like of 1-hexene, of 0.2 to 2.5 mol%, preferably 0.2 to 2.0 mol%, and a second fraction having a content of C₄-C₁₂ α-olefins, like of 1-hexene, of more than 2.5 to 6.0 mol%, preferably 3.0 to 5.0 mol%.

Preferably the weight ratio between the first fraction and the second fraction of the propylene copolymer of component (A) is 30/70 to 70/30, more preferably 40/60 to 60/40, like 45/55 to 55/45 [1^{st} fraction / 2^{nd} fraction].

In addition, component (A) as defined above may be produced in a polymerization process in the presence of the catalyst system as defined below.

The equipment of the polymerization process can comprise any polymerization reactors of conventional design for producing component (A). For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt% monomer. According to a preferred embodiment the slurry reactor comprises (is) a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system can comprise one or more conventional stirred tank slurry reactors, as described in WO 94/26794, and/or one or more gas phase reactors.

Preferably the reactors used are selected from the group of loop and gas phase reactors and, in particular, the process employs at least one loop reactor and at least one gas phase reactor. It is also possible to use several reactors of each type, e.g. one loop reactor and two or three gas phase reactors or two loop reactors and one gas phase reactor, in series.

In addition to the actual polymerization reactors used for producing component (A) the polymerization reaction system can also include a number of additional reactors, such as pre-and/or post-reactors. The pre-reactors include any reactor for pre-polymerizing the catalyst with propylene. The post-reactors include reactors used for modifying and improving the properties of the polymer product.

All reactors of the reactor system are preferably arranged in series.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate which will make the particles act as a fluid. The fluidizing gas can contain also inert carrier gases, like nitrogen and also hydrogen as a modifier. The fluidized gas phase reactor can be equipped with a mechanical mixer.

The gas phase reactor used can be operated in the temperature range of 50 to 115°C, preferably between 60 and 110°C and the reaction pressure between 5 and 50 bar and the partial pressure of monomer between 2 and 45 bar.

The pressure of the effluent, i.e. the polymerization product including the gaseous reaction medium, can be released after the gas phase reactor in order optionally to separate part of the gaseous and possible volatile components of the product, e.g. in a flash tank. The overhead stream or part of it is re-circulated to the reactor.

Multimodal polymers can be produced according to several processes which are described, e.g. in WO 92/12182, EP 0 887 379, and WO 98/58976.

A preferred multistage process is a "loop-gas phase"-process, such as developed by Borealis (known as BORSTAR^{®} technology) described e.g. in patent literature, such as in EP 0 887 379 or in WO 92/12182.

The polymerization takes place in the presence of a solid single site catalyst (SSC) system, said solid single site catalyst system comprises
(i) a transition metal compound of formula (I)

   Rₙ(Cp')₂MX₂ (I)

   wherein
   "M" is zirconium (Zr) or hafnium (Hf),
   each "X" is independently a monovalent anionic σ-ligand,
   each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
   "R" is a bivalent bridging group linking said organic ligands (Cp'),
   "n" is 1 or 2, preferably 1, and
(ii) optionally a cocatalyst (Co) comprising an element (E) of group 13 of the periodic table (IUPAC), preferably a cocatalyst (Co) comprising a compound of Al.

In one specific embodiment the solid single site catalyst system has a porosity measured according ASTM 4641 of less than 1.40 ml/g and/or a surface area measured according to ASTM D 3663 of lower than 25 m²/g. Preferably the solid catalyst system (SCS) has a surface area of lower than 15 m²/g, yet still lower than 10 m²/g and most preferred lower than 5 m²/g, which is the lowest measurement limit. The surface area according to this invention is measured according to ASTM D 3663 (N₂). Alternatively or additionally it is appreciated that the solid single site catalyst system has a porosity of less than 1.30 ml/g and more preferably less than 1.00 ml/g. The porosity has been measured according to ASTM 4641 (N₂). In another preferred embodiment the porosity is not detectable when determined with the method applied according to ASTM 4641 (N2).

Furthermore the solid single site catalyst system typically has a mean particle size of not more than 500 µm, i.e. preferably in the range of 2 to 500 µm, more preferably 5 to 200 µm. It is in particular preferred that the mean particle size is below 80 µm, still more preferably below 70 µm. A preferred range for the mean particle size is 5 to 70 µm, or even 10 to 60 µm.

As stated above the transition metal (M) is zirconium (Zr) or hafnium (Hf), preferably zirconium (Zr).

The term "σ-ligand" is understood in the whole description in a known manner, i.e. a group bound to the metal via a sigma bond. Thus the anionic ligands "X" can independently be halogen or be selected from the group consisting of R', OR', SiR'₃, OSiR'₃, OSO₂CF₃, OCOR', SR', NR'₂ or PR'₂ group wherein R' is independently hydrogen, a linear or branched, cyclic or acyclic, C₁-C₂₀-alkyl, C₂-C₂₀-alkenyl, C₂-C₂₀-alkynyl, C₃-C₁₂-cycloalkyl, C₆-C₂₀-aryl, C₇-C₂₀-arylalkyl, C₇-C₂₀-alkylaryl, C₈-C₂₀-arylalkenyl, in which the R' group can optionally contain one or more heteroatoms belonging to groups 14 to 16. In a preferred embodiments the anionic ligands "X" are identical and either halogen, like C₁, or methyl or benzyl.

A preferred monovalent anionic ligand is halogen, in particular chlorine (Cl). The substituted cyclopentadienyl-type ligand(s) may have one or more substituent(s) being selected from the group consisting of halogen, hydrocarbyl (e.g. C₁-C₂₀-alkyl, C₂-C₂₀-alkenyl, C₂-C₂₀-alkynyl,, C₃-C₂₀-cycloalkyl, like C₁-C₂₀-alkyl substituted C₅-C₂₀-cycloalkyl, C₆-C₂₀-aryl, C₅-C₂₀-cycloalkyl substituted C₁-C₂₀-alkyl wherein the cycloalkyl residue is substituted by C₁-C₂₀-alkyl, C₇-C₂₀-arylalkyl, C₃-C₁₂-cycloalkyl which contains 1, 2, 3 or 4 heteroatom(s) in the ring moiety, C₆-C₂₀-heteroaryl, C₁-C₂₀-haloalkyl, -SiR"₃, -SR", -PR"₂ or -NR"₂, each R" is independently a hydrogen or hydrocarbyl (e. g. C₁-C₂₀-alkyl, C₁-C₂₀-alkenyl, C₂-C₂₀-alkynyl, C₃-C₁₂-cycloalkyl, or C₆-C₂₀-aryl) or e.g. in case of -NR"₂, the two substituents R" can form a ring, e.g. five-or six-membered ring, together with the nitrogen atom where they are attached to.

Further "R" of formula (I) is preferably a bridge of 1 to 4 atoms, such atoms being independently carbon (C), silicon (Si), germanium (Ge) or oxygen (O) atom(s), whereby each of the bridge atoms may bear independently substituents, such as C₁-C₂₀-hydrocarbyl, tri(C₁-C₂₀-alkyl)silyl, tri(C₁-C₂₀-alkyl)siloxy and more preferably "R" is a one atom bridge like e.g. -SiR'"2-, wherein each R"' is independently C₁-C₂₀-alkyl, C₂-C₂₀-alkenyl, C₂-C₂₀-alkynyl, C₃-C₁₂-cycloalkyl, C₆-C₂₀-aryl, alkylaryl or arylalkyl, or tri(C₁-C₂₀-alkyl)silyl-residue, such as trimethylsilyl-, or the two R"' can be part of a ring system including the Si bridging atom.

In a preferred embodiment the transition metal compound has the formula (II) 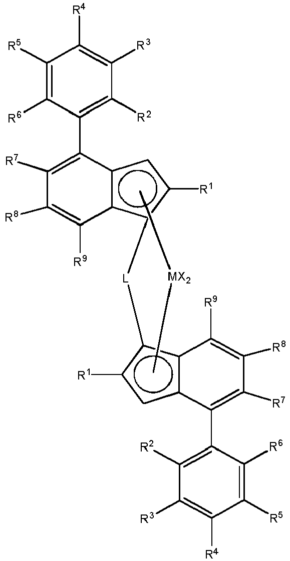 wherein
M is zirconium (Zr) or hafnium (Hf), preferably zirconium (Zr),
X are ligands with a σ-bond to the metal "M", preferably those as defined above for formula (I), preferably chlorine (Cl) or methyl (CH₃), the former especially preferred,
R¹ are equal to or different from each other, preferably equal to, and are selected from the group consisting of linear saturated C₁-C₂₀-alkyl, linear unsaturated C₁-C₂₀-alkyl, branched saturated C₁-C₂₀-alkyl, branched unsaturated C₁-C₂₀-alkyl, C₃-C₂₀ cycloalkyl, C₆-C₂₀ aryl, C₇-C₂₀ alkylaryl, and C₇-C₂₀ arylalkyl, optionally containing one or more heteroatoms of groups 14 to 16 of the Periodic Table (IUPAC),
   preferably are equal to or different from each other, preferably equal to, and are C₁-C₁₀ linear or branched hydrocarbyl, more preferably are equal to or different from each other, preferably equal to, and are C₁-C₆ linear or branched alkyl,
R² to R⁶ are equal to or different from each other and are selected from the group consisting of hydrogen, linear saturated C₁-C₂₀-alkyl, linear unsaturated C₁-C₂₀-alkyl, branched saturated C₁-C₂₀-alkyl, branched unsaturated C₁-C₂₀-alkyl, C₃-C₂₀-cycloalkyl, C₆-C₂₀-aryl, C₇-C₂₀-alkylaryl, and C₇-C₂₀-arylalkyl, optionally containing one or more heteroatoms of groups 14 to 16 of the Periodic Table (IUPAC),
   preferably are equal to or different from each other and are C₁-C₁₀ linear or branched hydrocarbyl, more preferably are equal to or different from each other and are C₁-C₆ linear or branched alkyl,
R⁷ and R⁸ are equal to or different from each other and selected from the group consisting of hydrogen, linear saturated C₁-C₂₀-alkyl, linear unsaturated C₁-C₂₀-alkyl, branched saturated C₁-C₂₀-alkyl, branched unsaturated C₁₀-C₂₀ alkyl, C₃-C₂₀-cycloalkyl, C₆-C₂₀ aryl, C₇-C₂₀ alkylaryl, C₇-C₂₀ arylalkyl, optionally containing one or more heteroatoms of groups 14 to 16 of the Periodic Table (IUPAC), SiR¹⁰₃, GeR¹⁰₃, OR¹⁰, SR¹⁰ and NR¹⁰₂,
   wherein
R¹⁰ is selected from the group consisting of linear saturated C₁-C₂₀-alkyl, linear unsaturated C₁-C₂₀-alkyl, branched saturated C₁-C₂₀-alkyl, branched unsaturated C₁-C₂₀-alkyl, C₃-C₂₀-cycloalkyl, C₆-C₂₀-aryl, C₇-C₂₀-alkylaryl, and C₇-C₂₀-arylalkyl, optionally containing one or more heteroatoms of groups 14 to 16 of the Periodic Table (IUPAC),
   and/or
R⁷ and R⁸ being optionally part of a C₄-C₂₀-carbon ring system together with the indenyl carbons to which they are attached, preferably a C₅ ring, optionally one carbon atom can be substituted by a nitrogen, sulfur or oxygen atom,
R⁹ are equal to or different from each other and are selected from the group consisting of hydrogen, linear saturated C₁-C₂₀-alkyl, linear unsaturated C₁-C₂₀-alkyl, branched saturated C₁-C₂₀-alkyl, branched unsaturated C₁-C₂₀-alkyl, C₃-C₂₀ cycloalkyl, C₆-C₂₀-aryl, C₇-C₂₀-alkylaryl, C₇-C₂₀-arylalkyl, OR¹⁰, and SR¹⁰,
   preferably R⁹ are equal to or different from each other and are H or CH₃,
   wherein R¹⁰ is defined as before,
L is a bivalent group bridging the two indenyl ligands, preferably being a C₂R¹¹₄ unit or a SiR¹¹₂ or GeR¹¹₂, wherein,
R¹¹ is selected from the group consisting of H, linear saturated C₁-C₂₀-alkyl, linear unsaturated C₁-C₂₀-alkyl, branched saturated C₁-C₂₀-alkyl, branched unsaturated C₁-C₂₀-alkyl, C₃-C₂₀-cycloalkyl, C₆-C₂₀-aryl, C₇-C₂₀-alkylaryl or C₇-C₂₀-arylalkyl, optionally containing one or more heteroatoms of groups 14 to 16 of the Periodic Table (IUPAC), preferably Si(CH₃)₂, SiCH₃C₆H₁₁, or SiPh₂, wherein C₆H₁₁ is cyclohexyl.

Preferably the transition metal compound of formula (II) is C₂-symmetric or pseudo-C₂-symmetric. Concerning the definition of symmetry it is referred to Resconi et al. Chemical Reviews, 2000, Vol. 100, No. 4 1263 and references cited therein.

Preferably the residues R¹ are equal to or different from each other, more preferably equal, and are selected from the group consisting of linear saturated C₁-C₁₀-alkyl, linear unsaturated C₁-C₁₀-alkyl, branched saturated C₁-C₁₀-alkyl, branched unsaturated C₁-C₁₀-alkyl and C₇-C₁₂-arylalkyl. Even more preferably the residues R¹ are equal to or different from each other, more preferably equal, and are selected from the group consisting of linear saturated C₁-C₆-alkyl, linear unsaturated C₁-C₆-alkyl, branched saturated C₁-C₆-alkyl, branched unsaturated C₁-C₆-alkyl and C₇-C₁₀-arylalkyl. Yet more preferably the residues R¹ are equal to or different from each other, more preferably equal, and are selected from the group consisting of linear or branched C₁-C₄-hydrocarbyl, such as for example methyl or ethyl.

Preferably the residues R² to R⁶ are equal to or different from each other and linear saturated C₁-C₄-alkyl or branched saturated C₁-C₄-alkyl. Even more preferably the residues R² to R⁶ are equal to or different from each other, more preferably equal, and are selected from the group consisting of methyl, ethyl, iso-propyl and tert-butyl.

Preferably R⁷ and R⁸ are equal to or different from each other and are selected from hydrogen and methyl, or they are part of a 5-methylene ring including the two indenyl ring carbons to which they are attached. In another preferred embodiment, R⁷ is selected from OCH₃ and OC₂H₅, and R⁸ is tert-butyl.

In a preferred embodiment the transition metal compound is rac-methyl(cyclohexyl)silanediyl bis(2-methyl-4-(4-tert-butylphenyl)indenyl)zirconium dichloride.

In a second preferred embodiment, the transition metal compound is rac-dimethylsilanediyl bis(2-methyl-4-phenyl-1,5,6,7-tetrahydro-s-indacen-1-yl)zirconium dichloride.

In a third preferred embodiment, the transition metal compound is rac-dimethylsilanediyl bis(2-methyl-4-phenyl-5-methoxy-6-tert-butylindenyl)zirconium dichloride.

As a further requirement the solid single site catalyst system according to this invention may comprise a cocatalyst (Co) comprising an element (E) of group 13 of the periodic table (IUPAC), for instance the cocatalyst (Co) comprises a compound of Al. Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the C₁ to C₁₀-alkylaluminoxanes, most particularly methylaluminoxane (MAO).

Preferably, the organo-zirconium compound of formula (I) and the cocatalyst (Co) of the solid single site catalyst system represent at least 70 wt%, more preferably at least 80 wt%, even more preferably at least 90 wt%, even further preferably at least 95 wt% of the solid catalyst system.

Thus it is appreciated that the solid single site catalyst system is featured by the fact that it is self-supported, i.e. it does not comprise any catalytically inert support material, like for instance silica, alumina or MgCl₂ or porous polymeric material, which is otherwise commonly used in heterogeneous catalyst systems, i.e. the catalyst is not supported on external support or carrier material. As a consequence of that the solid single site catalyst system is self-supported and it has a rather low surface area.

In one embodiment the solid single site catalyst system is obtained by the emulsion/solidification technology, the basic principles of which are described in WO 03/051934. This document is herewith included in its entirety by reference.

Hence the solid single site catalyst system is preferably in the form of solid catalyst particles, obtainable by a process comprising the steps of
a) preparing a solution of one or more catalyst components;
b) dispersing said solution in a second solvent to form an emulsion in which said one or more catalyst components are present in the droplets of the dispersed phase,
c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components. The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably C₃-C₃₀-perfluoroalkanes, -alkenes or - cycloalkanes, more preferred C₄-C₁₀-perfluoro-alkanes, -alkenes or -cycloalkanes, particularly preferred perfluorohexane, perfluoroheptane, perfluorooctane or perfluoro (methylcyclohexane) or perfluoro (1,3- dimethylcyclohexane) or a mixture thereof. Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated C₁₋Cₙ (suitably C₄-C₃₀ or C₅-C₁₅) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10°C/min, preferably 0.5 to 6°C/min and more preferably 1 to 5°C/min. Even more preferred the emulsion is subjected to a temperature change of more than 40°C, preferably more than 50°C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to WO 2006/069733 describing principles of such a continuous or semi-continuous preparation methods of the solid catalyst types, prepared via emulsion/solidification method.

The above described catalyst components are prepared according to the methods described in WO 01/48034.

According to the present invention, component (A) is typically no heterophasic system but rather comprises only one single phase.

### Component (B)

The second essential component of the polypropylene blend according to the present invention is a propylene homo- or copolymer as component (B). Component (B) has 2,1 regio-defects, especially 2,1 erythro regio-defects, of 0.40 % or less and/or is produced using a Ziegler-Natta catalyst. Furthermore, component (B) may be employed for improving the extrudability of component (A) by broadening the molecular weight distribution in terms or polydispersity index PI of the whole composition.

Thus component (B) can be a propylene homopolymer or copolymer, which can be produced with any suitable Ziegler-Natta catalyst known in the state of the art. In another embodiment, component (B) has 2,1 regio-defects, especially 2,1 erythro regio-defects, of 0.30 % or less as determined by ¹³C-NMR spectroscopy, preferably has 2,1 regio-defects especially 2,1 erythro regio-defects, of 0.20 % or less. In a further preferred embodiment, there are no detectable 2,1 regio-defects, especially 2,1 erythro regio-defects, in component (B) detectable.

Suitable Ziegler-Natta catalysts are known in the art. For example, Ziegler-Natta catalysts suitable for providing component (B) according to the present invention are described EP 1 448 631, EP 2 014 715 and in EP 2 279 216.

The MFR₂ of component (B) is typically lower than the MFR₂ of component (A). Thus the MFR₂ can be from 0.03 to less than 10 g/10min, such as 0.03 to 4.0 g/10min. Preferably, component (B) has an MFR₂ at 230°C according to ISO 1133 of less than 2.0 g/10min, preferably of 1.0 g/10min or less, more preferably of 0.6 g/10 min or less, such as 0.03 to 2.0 g/10min, or 0.1 to 1.0 g/10 min.

It only has to be taken into account that by adding component (B) to component (A) the overall MFR₂ of the blend as defined below should be within the desired ranges in order to achieve the desired properties of the blend. Thus the MFR₂ of component (B) depends also on the amount of added component (B) and the desired final MFR₂ of the blend.

If a propylene copolymer is used as component (B), this polypropylene copolymer is a copolymer which contains 90.0 to 99.8 mol%, preferably 93.0 to 99.5 mol%, more preferably 95.0 to 99.0 mol% of propylene and 0.2 to 10 mol%, preferably 0.5 to 7.0 mol%, more preferably 1.0 to 5.0 mol% of one or more of ethylene or a C₄-C₈ α-olefins. The C₄-C₈ α-olefin is preferably selected from 1-butene, 1-pentene, 1-hexene, 4-methyl-1-pentene and 1-octene. Particularly preferred is 1-butene or 1-hexene.

Thus preferred comonomers are ethylene, 1-butene and 1-hexene or mixtures therefrom. However, it is more preferred that the propylene copolymer does not comprise further comonomer(s), e.g. 1-hexene or 1-butene or ethylene is the only comonomer of the propylene copolymer (binary propylene-hexene or propylene-butene or propylene-ethylene copolymer). A binary propylene-ethylene copolymer is particularly mentioned.

If a propylene homopolymer is used as component (B), this homopolymer contains more than 99.8 mol% of propylene units, more preferably contains 100 mol% of propylene units, i.e. contains no detectable comonomer units. It is generally preferred according to the present invention that component (B) is a propylene homopolymer.

Furthermore, it is preferred that component (B) has a polydispersity index (Mw/Mn) of at least 3.0, more preferably of at least 3.2, yet more preferably in the range of 3.0 to 8.0, still more preferably in the range of 3.2 to 5.0.

Moreover, in a further preferred embodiment component (B) has a xylene cold soluble (XS) content of 10 wt% or less, more preferably 6.0 wt% or less, still more preferably 4.0 wt% or less, such as 0.5 to 10 wt% or 1.0 to 6.0 wt%.

The amount of xylene cold soluble (XCS) additionally indicates that the propylene copolymer as component (B) is preferably free of any elastomeric polymer component, like an ethylene propylene rubber. In other words the propylene copolymer as component (B) shall be not a heterophasic polypropylene, i.e. a system consisting of a polypropylene matrix in which an elastomeric phase is dispersed. Such systems are featured by a rather high xylene cold soluble content. Accordingly in a preferred embodiment the propylene copolymer as component (B) is a semi-crystalline polymer and monophasic, i.e. no different phases are for instance visible by high resolution microscopy, like electron microscopy or scanning force microscopy.

Preferably the propylene copolymer as component (B) has melting temperature (Tₘ) measured according to ISO 11357-3 in the range of 150 to 170 °C, more preferably in the range of 155 to 168 °C, still more preferably in the range of 158 to 166 °C, still yet more preferably in the range of 160 to 166 °C.

### Polypropylene blend

Preferably the polypropylene blend of the instant invention comprises the component (A) and component (B) substantially as the only polymer components of said blend, i.e. the blend may comprise further additives but no further other polymer or only a small amount of further (third) polymer, i.e. only up to 5 wt%, preferably only up to 2.5 wt% based on the blend of component (A) and (B) and the further polymer. Thus the both polymer components, i.e. component (A) and component (B), represents together preferably at least 90 wt%, more preferably at least 95 wt%, yet more preferably at least 97 wt% up to 99 wt%, of the polypropylene blend, whereas the remaining part, i.e. preferably not more than 10 wt%, more preferably not more than 5 wt%, yet more preferably not more than 3 wt%, like 1 wt% of the polypropylene blend represents additives as usual in the art, like e.g. fillers, antioxidants, stabilizers, acid scavengers, processing aids, antistatic agents, antiblocking agents, pigments and reinforcing agents, optionally provided in a polymer matrix. However, since the polypropylene blend according to the present invention is not β-nucleated, no β-nucleating agents are included. The above additives may be added together with up to 2 wt% (based on the total weight of the composition), preferably up to 1.5 wt% of a further polymer as outlined above.

Thus, the polypropylene blend of the instant invention preferably comprises, consists essentially of, or consists of:
a) 90 to 99 wt% of a blend of component (A) and component (B)
b) 1 to 10 wt% of additives comprising
   b₁) 0 to ≤ 2 wt%, preferably 0 to ≤ 1.5 wt% of a third polymer, more preferably no third polymer
   b₂) optionally one or more further additives usual in the art except β-nucleating agents which are excluded.

Such further, respectively third, polymer is typically introduced into the blend by using master-batches comprising the additives. Therefore the further, respectively third polymer can be any polymer used in the art to prepare such master-batches.

The term "β-nucleation" is known in the art in connection with the modification of polymer properties. Examples of known β-nucleating agents, which are excluded according to the present invention, comprise:
(1) dicarboxylic acid derivative type diamide compounds from C₅-C₈-cycloalkyl monoamines or C₆-C₁₂-aromatic monoamines and C₅-C₈-aliphatic, C₅-C₈-cycloaliphatic or C₆-C₁₂-aromatic dicarboxylic acids, e. g.
   - N,N'-di-C₅-C₈-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide,
   - N,N'-di-C₅-C₈-cycloalkyl-4,4-biphenyldicarboxamide compounds such as N,N'-dicyclohexyl-4,4-biphenyldicarboxamide and N,N'-dicyclopentyl-4,4-biphenyl-dicarboxamide,
   - N,N'-di-C₅-C₈-cycloalkyl-terephthalamide compounds such as N,N'-dicyclohexyl-terephthalamide and N,N'-dicyclopentylterephthalamide,
   - N,N'-di-C₅-C₈-cycloalkyl-1,4-cyclohexanedicarboxamide compounds such as N,N'-dicyclo-hexyl-1,4-cyclohexanedicarboxamide and N,N'-dicyclohexyl-1,4-cyclo-pentanedicarboxamide,
(2) diamine derivative type diamide compounds from C₅-C₈-cycloalkyl monocarboxylic acids or C₆-C12-aromatic monocarboxylic acids and C₅-C₈-cycloaliphatic or C₆-C₁₂-aromatic diamines, e. g.
   - N,N'-C₆-C₁₂-arylene-bis-benzamide compounds such as N,N'-p-phenylene-bis-benzamide and N,N'-1,5-naphthalene-bis-benzamide,
   - N,N'-C₅-C₈-cycloalkyl-bis-benzamide compounds such as N,N'-1,4-cyclopentane-bisbenzamide and N,N'-1,4-cyclohexane-bis-benzamide,
   - N,N'-p-C₆-C₁₂-arylene-bis-C₅-C₈₋cycloalkylcarboxamide compounds such as N,N'-1,5-naphthalene-bis-cyclohexanecarboxamide and N,N'-1,4-phenylene-bis-cyclohexane-carboxamide, and
   - N,N'-C₅-C₈-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,
(3) amino acid derivative type diamide compounds from amidation reaction of Cs-Cg-alkyl, C₅-C₈-cycloalkyl-or C₆-C₁₂-arylamino acids,C₅-C₈-alkyl-, C₅-C₈-cycloalkyl-or C₆-C₁₂-aromatic monocarboxylic acid chlorides and C₅-C₈-alkyl-, C₅-C₈-cycloalkyl-or C₆-C₁₂-aromatic mono-amines, e.g.
   - N-phenyl-5-(N-benzoylamino)pentaneamide and N-cyclohexyl-4-(N-cyclohexyl-carbonylamino)benzamide,
(4) quinacridone type compounds, e.g. quinacridone, dimethylquinacridone and dimethoxyquinacridone,
(5) quinacridonequinone type compounds, e. g. quinacridonequinone, a mixed crystal of 5,12-dihydro(2,3b)acridine-7,14-dione with quino(2,3b)acridine-6,7,13,14-(5H,12H)-tetrone and dimethoxyquinacridonequinone,
(6) dihydroquinacridone type compounds, e. g. dihydroquinacridone, dimethoxy-dihydroquinacridone and dibenzodihydroquinacridone,
(7) dicarboxylic acid salts of metals from group IIa of periodic system, e. g. pimelic acid calcium salt and suberic acid calcium salt,
(8) mixtures of dicarboxylic acids and salts of metals from group IIa of periodic system,
(9) salts of metals from group IIa of periodic system and imido acids of the formula 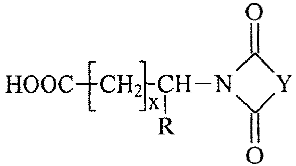 wherein x = 1 to 4; R is selected from H, -COOH, C₁-C₁₂-alkyl, C₅-C₈-cycloalkyl or C₆-C₁₂-aryl, and Y is selected from C₁-C₁₂-alkyl, C₅-C₈-cycloalkyl or C₆-C₁₂-aryl-substituted bivalent C₆-C₁₂-aromatic residues, e. g. calcium salts of phthaloylglycine, hexahydrophthaloylglycine, N-phthaloylalanine and/or N-4-methylphthaloylglycine.

Additionally it is preferred that the polypropylene composition itself has a melt flow rate MFR₂ (230 °C) in the range of 0.3 g/10min to 10 g/10 min, preferably 0.3 g/10min to 8 g/10 min, more preferably 0.3 g/10min to 6 g/10min, like 0.4 g/10min to 4 g/10min.

In the polypropylene according to the present invention, the weight ratio of component (A) to component (B) is preferably 5:95 to 95:5, more preferably is 8:92 to 92:8, still more preferably is 10:90 to 90:10.

The final polypropylene blend shall be suitable as pipe material. Thus the blend must comply with standards in this field. To achieve the requirements defined in the standards and on the other hand being economically processable it has been found that the blend should have a polydispersity index (Mw/Mn) of at least 3.0, more preferably of at least 3.2, yet more preferably in the range of 3.0 to 8.0, still more preferably in the range of 3.2 to 5.0.

The instant polypropylene blend has been in particular developed to improve the properties of pipes, in particular in terms of very good creep performance by keeping the other properties, like resistance to deformation and impact strength, on a high level. Thus, the instant invention is also directed to the use of the instant polypropylene blend as part of a pipe, like a pressure pipe, and for the manufacture of pipes. In addition it is appreciated that polypropylene blend enables to provide pipes having a very good creep performance. In particular, the present invention also relates to the use of a polypropylene blend according to any one of the preceding claims for the manufacture of single layer pipes or one layer of a multilayer pipe.

Thus, it is preferred that the polypropylene blend and/or the pipes, respectively, based on the polypropylene blend has/have a pressure test performance measured according ISO 1167 of:
(a) at least 400 h at 5 MPa and 95°C (pipe diameter 32mm; wall thickness 3mm), preferably at least 900 h and/or
(b) at least 6000 h at 3.5 MPa and 95°C (pipe diameter 32mm; wall thickness 3mm), and/or
(c) at least 3000 h at 16 MPa and 20°C (pipe diameter 32mm; wall thickness 3mm).

Accordingly the present invention is especially directed to pipes, especially to single layer pipes or multilayer pipes. More preferably the pipes, like the single layer pipes, or at least one layer, preferably one layer, of the multilayer pipes comprises at least 60.0 wt%, more preferably at least 80.0 wt%, still more preferably at least 90 wt%, yet more preferably at least 95.0 wt%, like consisting, of the instant polypropylene blend.

The term "pipe" as used herein is meant to encompass hollow articles having a length greater than the diameter. Moreover the term "pipe" shall also encompass supplementary parts like fittings, valves and all parts which are commonly necessary for e.g. a hot water piping system.

Pipes according to the invention also encompass single layer pipes and multilayer pipes, where for example one layer comprises the inventive polypropylene blend and one or more further layers are metal layers, adhesive layers, or other layers usual in the art.

The blending of component (A) with component (B) can be carried out by methods known per se, e.g. by mixing component (A) with component (B) in the desired weight relationship using a batch or a continuous process. As examples of typical batch mixers the Banbury and the heated roll mill can be mentioned. Continuous mixers are exemplified by the Farrel mixer, the Buss co-kneader, and single- or twin-screw extruders, preferably a co-rotating or counter-rotating twin screw extruder is used. It is also possible to use a single screw extruder such as the Buss Co-kneader, i.e. a single screw mixer with a downstream discharge single screw extruder including a pelletising unit. Static mixers such as Kenics, Koch, etc. can also be used.

In case pipes shall be produced of the inventive polypropylene blend then after the manufacture of the inventive polypropylene blend the following steps follow. In general the inventive polypropylene blend is extruded and subsequently formed into a pipe or surrounds a conductor or several conductors.

Accordingly the inventive pipe is preferably produced by first plasticizing the polypropylene blend of the instant invention in an extruder at temperatures in the range of from 200 to 300°C and then extruding it through annular die and cooling it. The extruders for producing the pipe can be single screw extruders with an L/D of 20 to 40 or twin screw extruders or extruder cascades of homogenizing extruders (single screw or twin screw). Optionally, a melt pump and/or a static mixer can be used additionally between the extruder and the ring die head. Ring shaped dies with diameters ranging from approximately 16 to 2000 mm and even greater are possible.

The melt arriving from the extruder is first distributed over an annular cross-section via conically arranged holes and then fed to the core/die combination via a coil distributor or screen. If necessary, restrictor rings or other structural elements for ensuring uniform melt flow may additionally be installed before the die outlet. After leaving the annular die, the pipe is taken off over a calibrating mandrel, usually accompanied by cooling of the pipe by air cooling and/or water cooling, optionally also with inner water cooling.

The present invention will now be described in further detail by the examples provided below.

### EXAMPLES

### 1. Definitions/Measuring Methods

The following definitions of terms and determination methods apply for the above general description of the invention as well as to the below examples unless otherwise defined.

### Quantification of polypropylene homopolymer microstructure by NMR spectroscopy

Quantitative nuclear-magnetic resonance (NMR) spectroscopy was used to quantify the isotacticity and content of regio-defects of the polypropylene homopolymers. Quantitative ¹³C{¹H} NMR spectra recorded in the solution-state using a Bruker Advance III 400 NMR spectrometer operating at 400.15 and 100.62 MHz for ¹H and ¹³C respectively. All spectra were recorded using a ¹³C optimised 10 mm selective excitation probehead at 125°C using nitrogen gas for all pneumatics. Approximately 200 mg of material was dissolved in 1,2-tetrachloroethane-*d*₂ (TCE-*d*₂). This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra. Quantitative ¹³C{¹H} NMR spectra were processed, integrated and relevant quantitative properties determined from the integrals using proprietary computer programs. All chemical shifts are internally referenced to the methyl signal of the isotactic pentad mmmm at 21.85 ppm.

The tacticity distribution was quantified through integration of the methyl region between 23.6 and 19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251). The pentad isotacticity was determined through direct integration of the methyl region and reported as either the mole fraction or percentage of isotactic pentad mmmm with respect to all steric pentads i.e. [mmmm] = mmmm / sum of all steric pentads. When appropriate integrals were corrected for the presence of sites not directly associated with steric pentads.

Characteristic signals corresponding to regio irregular propene insertion were observed (Resconi, L., Cavallo, L., Fait, A., Piemontesi, F., Chem. Rev. 2000, 100, 1253). The presence of secondary inserted propene in the form of 2,1 erythro regio defects was indicated by the presence of the two methyl signals at 17.7 and 17.2 ppm and confirmed by the presence of other characteristic signals. The amount of 2,1 erythro regio defects was quantified using the average integral (e) of the e6 and e8 sites observed at 17.7 and 17.2 ppm respectively, i.e. e = 0.5 * (e6 + e8). Characteristic signals corresponding to other types of regio irregularity were not observed (Resconi, L., Cavallo, L., Fait, A., Piemontesi, F., Chem. Rev. 2000, 100, 1253). The amount of primary inserted propene (p) was quantified based on the integral of all signals in the methyl region (CH3) from 23.6 to 19.7 ppm paying attention to correct for other species included in the integral not related to primary insertion and for primary insertion signals excluded from this region such that p = CH3 + 2*e. The relative content of a specific type of regio defect was reported as the mole fraction or percentage of said regio defect with respect all observed forms of propene insertion i.e. sum of all primary (1,2), secondary (2,1) and tertiary (3,1) inserted propene units, e.g. [21e] = e / (p + e + t + i). The total amount of secondary inserted propene in the form of 2,1-erythro or 2,1-threo regio defects was quantified as sum of all said regio irregular units, i.e. [21] = [21e] + [21t].

### Quantification of copolymer microstructure by NMR spectroscopy

Quantitative nuclear-magnetic resonance (NMR) spectroscopy was used to quantify the isotacticity, regio-regularity, comonomer content and comonomer distribution of the copolymers, specifically propene-co-1-hexene copolymers. Quantitative ¹³C{¹H} NMR spectra recorded in the molten-state using a Bruker Advance III 500 NMR spectrometer operating at 500.13 and 125.76 MHz for ¹H and ¹³C respectively. All spectra were recorded using a ¹³C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006, 207, 382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 2373; Parkinson, M., Hubner, G., Fonseca, I. ACS Symposium Series, Vol. 1077, Ch. 24, pp 401-415). Standard single-pulse excitation was employed utilising the NOE at short recycle delays (Pollard, M., Klimke, K., Graf, R., Spiess, H.W., Wilhelm, M., Sperber, O., Piel, C., Kaminsky, W., Macromolecules 2004, 37, 813; Klimke, K., Parkinson, M., Piel, C., Kaminsky, W., Spiess, H.W., Wilhelm, M., Macromol. Chem. Phys. 2006, 207, 382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectra. Quantitative ¹³C{¹H} NMR spectra were processed, integrated and relevant quantitative properties determined from the integrals. All chemical shifts are internally referenced to the methyl isotactic pentad (mmmm) at 21.85 ppm.

The tacticity distribution was quantified through integration of the methyl region between 23.6 and 19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251). The triad isotacticity was determined through direct integration of the methyl region and reported as either the mole fraction or percentage of isotactic triad mm with respect to all steric triads i.e. [mm] = mm / sum of all steric triads. When appropriate integrals were corrected for the presence of sites not directly associated with steric triads.

Characteristic signals corresponding to regio irregular propene insertion were observed (Resconi, L., Cavallo, L., Fait, A., Piemontesi, F., Chem. Rev. 2000, 100, 1253). The presence of secondary inserted propene in the form of 2,1 erythro regio defects was indicated by the presence of the two methyl signals at 17.7 and 17.2 ppm and confirmed by the presence of other characteristic signals. The amount of 2,1 erythro regio defects was quantified using the average integral (e) of the e6 and e8 sites observed at 17.7 and 17.2 ppm respectively, i.e. e = 0.5 * (e6 + e8). Characteristic signals corresponding to other types of regio irregularity were not observed (Resconi, L., Cavallo, L., Fait, A., Piemontesi, F., Chem. Rev. 2000, 100, 1253). The amount of primary inserted propene (p) was quantified based on the integral of all signals in the methyl region (CH3) from 23.6 to 19.7 ppm paying attention to correct for other species included in the integral not related to primary insertion and for primary insertion signals excluded from this region such that p = CH3 + 2*e. The relative content of a specific type of regio defect was reported as the mole fraction or percentage of said regio defect with respect all observed forms of propene insertion i.e. sum of all primary (1,2), secondary (2,1) and tertiary (3,1) inserted propene units, e.g. [21e] = e / (p + e + t + i). The total amount of secondary inserted propene in the form of 2,1-erythro or 2,1-threo regio defects was quantified as sum of all said regio irregular units, i.e. [21] = [21e] + [21t].

Characteristic signals corresponding to the incorporation of 1-hexene were observed. The presence of 1-hexene copolymerisation was indicated by the presence of the methyl and methyene signals at 13.9 and 34.0 ppm respectively and confirmed by the presence of other characteristic signals. The amount of isolated comonomer incorporation (PPHPP) was quantified using the integral of the αB4 site observed at 44.1 ppm i.e. H = αB4/2. No signals were observed indicative of consecutive or non-consecutive double 1-hexene incorporation and the total 1-hexen comonomer content was calculated based on only the content of isolated hexene incorporation i.e. Htotal = H. A statistical comonomer distribution was suggested from the distribution of 1-hexene present as isolated (PPHPP) and consecutive double incorporation (PPHHPP) i.e. HH < H². The comonomer content was calculated as the mole fraction or percent of 1-hexene incorporated into the copolymer with respect to all monomer present in the copolymer i.e. [H] = Htotal / (Ptotal + Htotal) where the total amount of propene in the copolymer was quantified as the sum of all primary (1,2) and regio-irregular propene insertion i.e. Ptotal = p + e + t + i. The comonomer content in weight percent was calculated from the mole fraction in the usual way i.e. [H wt%] = 100 * ([H] * 84.16) / (([H] * 84.16) + ((1-[H]) * 42.08)).

### Number average molecular weight (Mₙ), weight average molecular weight (M_{w}) and polydispersity index (Mn/Mn)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 µL of sample solution were injected per analysis. The column set was calibrated using universal calibration (according to ISO 16014-2:2003) with at least 15 narrow MWD polystyrene (PS) standards in the range of 0.5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**The xylene soluble fraction at room temperature (XS, wt.%):** The amount of the polymer soluble in xylene is determined at 25 °C according to ISO 16152; first edition; 2005-07-01. **MFR₂** is measured according to ISO 1133 (230°C, 2.16 kg load). The melt flow rate is that quantity of polymer in grams which the test apparatus standardized to ISO 1133 extrudes within 10 minutes at a temperature of 230°C under a load of 2.16kg.

**Melting temperature Tₘ, crystallization temperature T_{c},** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

**Pressure test performance** is measured according to ISO 1167. In this test, a specimen is exposed to constant circumferential (hoop) stress of 16 MPa (for PP copolymers) respectively 21 MPa (for PP homopolymers) at elevated temperature of 20 °C in water-in-water or 4.2 MPa (for PP copolymers) respectively 3.5 MPa (for PP homopolymers) at a temperature of 95 °C in water-in-water. The time in hours to failure is recorded. The tests were performed on pipes produced on a conventional pipe extrusion equipment, the pipes having a diameter of 32 mm and a wall thickness of 3 mm.

**Porosity:** BET with N₂ gas, ASTM 4641, apparatus Micromeritics Tristar 3000; sample preparation: at a temperature of 50 °C, 6 hours in vacuum.

**Surface area:** BET with N₂ gas ASTM D 3663, apparatus Micromeritics Tristar 3000: sample preparation at a temperature of 50 °C, 6 hours in vacuum.

### B. Examples

### Component A

The catalyst used is described in Example 1 of EP 1 741 725 A1

**Table 1: Component A: Process conditions and properties**

| **Loop** | | |
|---|---|---|
| Temperature | [°C] | 70.0 |
| MFR₂ | [g/10min] | 4.6 |
| Split | [wt%] | 49.1 |
| C₆ content | [wt%] | 1.4 |
| C₂ content | [wt%] | - |

| **1^{st} Gas Phase** | | |
|---|---|---|
| Temperature | [°C] | 85 |
| Split | [wt%] | 50.9 |
| MFR₂ | g/10min | 4.3 |
| C₆ content | [wt%] | 4.3 |
| C₂ content | [wt%] | - |
| 2,1e | [%] | 0.75 |
| Tm | [°C] | 147 |
| XCS | [wt%] | 1.08 |

### Component B

**Table 2: Properties of Component B**

| | | |
|---|---|---|
| MFR₂ | g/10min | 0.3 |
| C₆ content | [wt%] | - |
| C₂ content | [wt%] | - |
| 2,1e | [%] | 0 |
| Tm | [°C] | 163 |
| XCS | [wt%] | 3.0 |

Compositions comprising only component (A) or only component (B) as well as a composition comprising only the propylene random copolymer RA130E were used as reference compositions. RA130E is commercially available from Borealis AG, and has a MFR₂ at 230°C of 0.25 g/10min. This product is industrially used for the manufacture of pipes.

### Examples 1 and 2 and Comparative Examples 1 to 3

Pipes with a diameter of 32mm and a wall thickness of 3mm were extruded using RA130E, component (A), component (B) as well as blends of component (A) and component (B). The results obtained in the pipe pressure test at different pressures and temperatures (average of two samples) are shown in table 2.

**Table 3:**

| | | **E1** | **E2** | **CE1** | **CE2** | **CE3** |
|---|---|---|---|---|---|---|
| Component (A) | [wt%] | 10 | 90 | - | 100 | - |
| Component (B) | [wt%] | 90 | 10 | 100 | - | - |
| RA130E | [wt%] | - | - | - | - | 100 |
| MFR₂ | [g/10min] | 0.44 | 4 | 0.3 | 4.3 | 0.25 |

| Pipe pressure tests | | | | | | |
|---|---|---|---|---|---|---|
| 5 MPa at 95°C | [h] | 452 | >9000 | 842 | 0 | 264 |
| 3.5 MPa at 95°C | [h] | 6202 | >9000 | 1872 | >9000 | >9000 |
| 16 MPa at 20°C | [h] | >13000 | 3432 | >13000 | 7 | 31 |

The blend of example 1 comprising component (A) and component (B) in a weight ratio of 10:90 shows a pressure resistance at low temperatures (20°C) comparable to that of component (B) alone exceeding 10000 h (still running). At high temperatures (95°C), however, pressure resistance is increased, especially at 3.5 MPa, over component (B) alone. Compared to component (A) alone or to the industrially employed pipe material RA130E, example 1 shows better pressure resistance at all temperatures and pressures.

The blend of example 2 comprising component (A) and component (B) in a weight ratio of 90:10 shows surprisingly good pressure resistance, especially at high temperatures (95°C) and high pressures. The blend exceeds the performance at high temperatures of component (A) alone, component (B) alone or the commercially available pipe material RA130E.

Summing up, the inventive blend, while keeping the pressure resistance at low temperatures on a satisfying level, clearly has improved pressure resistance at high temperatures.

## Claims

1. A polypropylene blend comprising:
(a) Component (A) being a copolymer of propylene and a C₄-C₁₂ α-olefin, and having 2,1 regio-defects of more than 0.40 % determined by ¹³C-NMR spectroscopy, wherein component (A) has an MFR₂ at 230°C according to ISO 1133 of 0.25 to 10 g/10min, and
(b) Component (B) being a propylene homo- or copolymer having 2,1 regio-defects of 0.40 % or less determined by¹³C-NMR spectroscopy,
wherein the polypropylene blend is not β-nucleated.

2. A polypropylene blend according to claim 1, comprising:
(a) Component (A) being a copolymer of propylene and a C₄-C₁₂ α-olefin made with a single site catalyst system, and
(b) Component (B) being a propylene homo- or copolymer made with a Ziegler-Natta catalyst,
wherein the polypropylene blend is not β-nucleated.

3. The polypropylene blend according to claim 1, wherein component (A) is made with a single site catalyst system and/or component (B) is made with a Ziegler-Natta catalyst.

4. The polypropylene blend of any one of claims 1 to 3, wherein component (B) has an MFR₂ at 230°C according to ISO 1133 of 0.03 to 10 g/10min, preferably of 0.03 to 4.0 g/10min, more preferably of 0.03 to 2.0 g/10 min.

5. The polypropylene blend of any one of the preceding claims, wherein the weight ratio of component (A) to component (B) is 5:95 to 95:5, preferably is 8:92 to 92:8, more preferably is 10:90 to 90:10.

6. The polypropylene blend of any one of the preceding claims, wherein
(a) Component (A) has 2,1 erythro regio-defects of more than 0.40 % determined by ¹³C-NMR spectroscopy, preferably 2,1 regio-defects, especially 2,1 erythro regio-defects of 0.60 % or more, more preferably has 2,1 regio-defects, especially 2,1 erythro regio-defects of 0.70 % or more,
and/or
(b) Component (B) has 2,1 regio-defects of 0.30 % or less determined by ¹³C-NMR spectroscopy, preferably has 2,1 regio-defects of 0.20 % or less.

7. The polypropylene blend of any one of the preceding claims, wherein
(a) component (A) has a comonomer content of 1 mol% or more, preferably of 1.5 mol% or more, more preferably of 2 mol% or more,
and/or
(b) the comonomers of component (A) are selected from C₄-C₁₀ α-olefins, preferably C₄-C₈ α-olefins, more preferably from C₄-C₆ α-olefins,
and/or
(c) component (B) is a propylene homopolymer.

8. The polypropylene blend of any one of the preceding claims, wherein
(a) component (A) has been produced in the presence of a single site catalyst system comprising a transition metal compound of the formula (I)
Rₙ(Cp')₂MX₂ (I)
wherein
"M" is zirconium or hafnium,
each "X" is independently a monovalent anionic α-ligand,
each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" is a bivalent bridging group linking said organic ligands (Cp'),
"n" is 1 or 2, preferably 1,
optionally in combination with a cocatalyst (Co) comprising an element (E) of group 13 of the periodic table (IUPAC), and wherein preferably
(b) the transition metal compound has the formula (II) 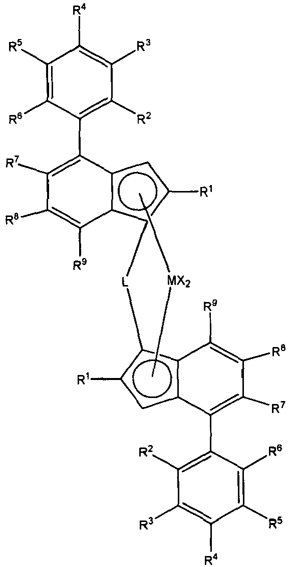 wherein
M is zirconium or hafnium,
X are ligands with a α-bond to the metal "M", as defined for formula (I),
R¹ are equal to or different from each other, and are selected from the group consisting of linear saturated C₁ to C₂₀ alkyl, linear unsaturated C₁ to C₂₀ alkyl, branched saturated C₁-C₂₀ alkyl, branched unsaturated C₁ to C₂₀ alkyl, C₃ to C₂ cycloalkyl, C₆ to C₂₀ aryl, C₇ to C₂₀ alkylaryl, and C₇ to C₂₀ arylalkyl, optionally containing one or more heteroatoms of groups 14 to 16 of the Periodic Table (IUPAC),
R² to R⁶ are equal to or different from each other and are selected from the group consisting of hydrogen, linear saturated C₁-C₂₀ alkyl, linear unsaturated C₁-C₂₀ alkyl, branched saturated C₁-C₂₀ alkyl, branched unsaturated C₁-C₂₀ alkyl, C₃-C₂₀ cycloalkyl, C₆-C₂₀ aryl, C₇-C₂₀ alkylaryl, and C₇-C₂₀ arylalkyl, optionally containing one or more heteroatoms of groups 14 to 16 of the Periodic Table (IUPAC),
R⁷ and R⁸ are equal to or different from each other and selected from the group consisting of hydrogen, linear saturated C₁ to C₂₀ alkyl, linear unsaturated C₁ to C₂₀ alkyl, branched saturated C₁ to C₂₀ alkyl, branched unsaturated C₁, to C₂₀ alkyl, C₃ to C₂₀ cycloalkyl, C₆ to C₂₀ aryl, C₇ to C₂₀ alkylaryl, C₇ to C₂₀ arylalkyl, optionally containing one or more heteroatoms of groups 14 to 16 of the Periodic Table (IUPAC), SiR¹⁰₃, GeR¹⁰₃, OR¹⁰, SR¹⁰ and NR¹⁰₂,
wherein SiR¹⁰₃, GeR¹⁰₃, NR¹⁰₂,
wherein
R¹⁰ is selected from the group consisting of linear saturated C₁-C₂₀ alkyl, linear unsaturated C₁, to C₂₀ alkyl, branched saturated C₁, to C₂₀ alkyl, branched unsaturated C₁ to C₂₀ alkyl, C₃ to C₂₀ cycloalkyl, C₆ to C₂₀ aryl, C₇ to C₂₀ alkylaryl, and C₇ to C₂₀ arylalkyl, optionally containing one or more heteroatoms of groups 14 to 16 of the Periodic Table (IUPAC),
and/or
R⁷ and R⁸ being optionally part of a C₄ to C₂₀ carbon ring system together with the indenyl carbons to which they are attached, optionally one carbon atom can be substituted by a nitrogen, sulfur or oxygen atom,
R⁹ are equal to or different from each other and are selected from the group consisting of hydrogen, linear saturated C₁ to C₂₀ alkyl, linear unsaturated C₁ to C₂₀ alkyl, branched saturated C₁ to C₂₀ alkyl, branched unsaturated C₁ to C₂₀ alkyl, C₃ to C₂₀ cycloalkyl, C₆ to C₂₀ aryl, C₇ to C₂₀ alkylaryl, C₇ to C₂₀ arylalkyl, OR¹⁰, and SR¹⁰,
wherein R¹⁰ is defined as before,
L is a bivalent group bridging the two indenyl ligands, selected from a C₂R¹¹₄ unit or a SiR¹¹₂ or GeR¹¹₂, wherein,
R¹¹ is selected from the group consisting of H, linear saturated C₁ to C₂₀ alkyl, linear unsaturated C₁ to C₂₀ alkyl, branched saturated C₁ to C₂₀ alkyl, branched unsaturated C₁ to C₂₀ alkyl, C₃ to C₂₀ cycloalkyl, C₆ to C₂₀ aryl, C₇ to C₂₀ alkylaryl or C₇ to C₂₀ arylalkyl, optionally containing one or more heteroatoms of groups 14 to 16 of the Periodic Table (IUPAC), and wherein more preferably
(c) the transition metal compound of the formula (I) or (II) is selected from rac-methyl(cyclohexyl)silanediyl bis(2-methyl-4-(4-tert-butylphenyl)indenyl)zirconium dichloride, rac-dimethylsilanediyl bis(2-methyl-4-phenyl-1,5,6,7-tetrahydro-s-indacen-1-yl)zirconium dichloride and rac-dimethylsilanediyl bis(2-methyl-4-phenyl-5-methoxy-6-tert-butylindenyl)zirconium dichloride.

9. The polypropylene blend of any one of the preceding claims, wherein
(a) component (B) has a polydispersity index (Mw/Mn) of at least 3.0, and/or
(b) the polypropylene blend has a polydispersity index (Mw/Mn) in the range of 3.0 to 8.0.

10. Use of a polypropylene blend according to any one of the preceding claims 1 to 9 for the manufacture of single layer pipes or one layer of a multilayer pipe.

11. Pipes comprising a polypropylene blend according to any one of claims 1 to 9.

12. Pipes according to claim 11, wherein pipes are single layer pipes or multilayer pipes, wherein at least one layer of the multilayer pipes comprises a polypropylene blend according to any one of claims 1 to 9.

13. Pipes according to claim 11 or 12, wherein the pipes have a pressure test performance measured according ISO 1167 of
(a) at least 400 h at 5 MPa and 95°C (pipe diameter 32mm; wall thickness 3mm),
and/or
(b) at least 6000 h at 3.5 MPa and 95°C (pipe diameter 32mm; wall thickness 3mm),
and/or
(c) at least 3000 h at 16 MPa and 20°C (pipe diameter 32mm; wall thickness 3mm).

## Patentansprüche

1. Polypropylen-Blend, umfassend:
(a) Komponente (A), die ein Copolymer von Propylen und einem C₄-C₁₂ α-Olefin ist, und mit 2, 1-Regiodefekten von mehr als 0,40 %, bestimmt durch ¹³C-NMR-Spektroskopie, wobei Komponente (A) eine MFR₂ bei 230°C gemäß ISO 1133 von 0,25 bis 10 g/10 min aufweist, und
(b) Komponente (B), die ein Propylen-Homo- oder - Copolymer mit 2,1-Regiodefekten von 0,40 % oder weniger, bestimmt durch ¹³C-NMR-Spektroskopie, ist,
wobei das Polypropylen-Blend nicht ß-nukleiert ist.

2. Polypropylen-Blend nach Anspruch 1, umfassend:
(a) Komponente (A), die ein Copolymer von Propylen und einem C₄-C₁₂ α-Olefin, hergestellt mit einem Single-Site-Katalysator-System, ist, und
(b) Komponente (B), die ein Propylen-Homo- oder - Copolymer, hergestellt mit einem Ziegler-Natta-Katalysator, ist,
wobei das Polypropylen-Blend nicht ß-nukleiert ist.

3. Polypropylen-Blend nach Anspruch 1, wobei Komponente (A) mit einem Single-Site-Katalysator-System hergestellt ist und/oder Komponente (B) mit einem Ziegler-Natta-Katalysator hergestellt ist.

4. Polypropylen-Blend nach einem der Ansprüche 1 bis 3, wobei Komponente (B) eine MFR₂ bei 230°C gemäß ISO 1133 von 0,03 bis 10 g/10 min, vorzugsweise von 0,03 bis 4,0 g/10 min, bevorzugter von 0,03 bis 2,0 g/10 min, aufweist.

5. Polypropylen-Blend nach einem der vorangehenden Ansprüche, wobei das Gewichts-Verhältnis von Komponente (A) zu Komponente (B) 5:95 bis 95:5 ist, vorzugsweise 8:92 bis 92:8 ist, bevorzugter 10:90 bis 90:10 ist.

6. Polypropylen-Blend nach einem der vorangehenden Ansprüche, wobei
(a) Komponente (A) 2,1-Erythro-Regiodefekte von mehr als 0,40 %, bestimmt durch ¹³C-NMR-Spektroskopie, vorzugsweise 2,1-Regiodefekte, insbesondere 2,1-Erythro-Regiodefekte, von 0,60 % oder mehr, aufweist, bevorzugter 2,1-Regiodefekte, insbesondere 2,1-Erythro-Regiodefekte, von 0,70 % oder mehr, aufweist,
und/oder
(b) Komponente (B) 2,1-Regiodefekte von 0,30 % oder weniger, bestimmt durch ¹³C-NMR-Spektroskopie, aufweist, vorzugsweise 2,1-Regiodefekte von 0,20 % oder weniger aufweist.

7. Polypropylen-Blend nach einem der vorangehenden Ansprüche, wobei
(a) Komponente (A) einen Comonomer-Gehalt von 1 Mol-% oder mehr, vorzugsweise von 1,5 Mol-% oder mehr, bevorzugter von 2 Mol-% oder mehr, aufweist,
und/oder
(b) die Comonomere von Komponente (A) ausgewählt sind aus C₄-C₁₀ α-Olefinen, vorzugsweise C₄-C₈ α-Olefinen, bevorzugter aus C₄-C₆ α-Olefinen,
und/oder
(c) Komponente (B) ein Propylen-Homopolymer ist.

8. Polypropylen-Blend nach einem der vorangehenden Ansprüche, wobei
(a) Komponente (A) in Gegenwart von einem Single-Site-Katalysator-System hergestellt wurde, umfassend eine Übergangs-Metall-Verbindung der Formel (I)
Rₙ(Cp')₂MX₂ (I)
worin
"M" Zirkonium oder Hafnium ist,
jedes "X" unabhängig ein einwertiger anionischer σ-Ligand ist,
jedes "Cp'" ein organischer Ligand vom Cyclopentadienyl-Typ ist, unabhängig ausgewählt aus der Gruppe, bestehend aus substituiertem Cyclopentadienyl, substituiertem Indenyl, substituiertem Tetrahydroindenyl und substituiertem oder unsubstituiertem Fluorenyl, wobei die organischen Liganden an das Übergangs-Metall (M) koordinieren,
"R" eine zweiwertige Brücken-Gruppe ist, die die organischen Liganden (Cp') verbindet,
"n" 1 oder 2, vorzugsweise 1, ist
gegebenenfalls in Kombination mit einem Cokatalysator (Co), umfassend ein Element (E) von Gruppe 13 des Perioden-Systems (IUPAC), und wobei vorzugsweise
(b) die Übergangs-Metall-Verbindung die Formel (II) aufweist 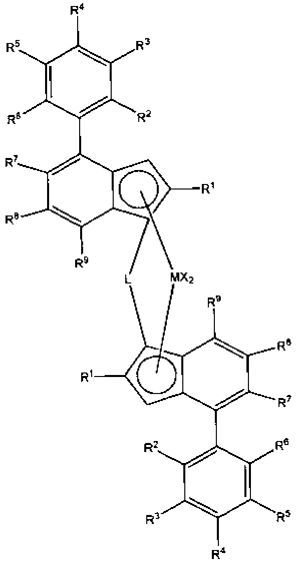 worin
M Zirkonium oder Hafnium ist,
X Liganden mit einer σ-Bindung an das Metall "M", wie für Formel (I) definiert, sind,
R¹ gleich oder verschieden voneinander sind, und ausgewählt sind aus der Gruppe, bestehend aus linearem gesättigtem C₁ bis C₂₀ Alkyl, linearem ungesättigtem C₁ bis C₂₀ Alkyl, verzweigtem gesättigtem C₁-C₂₀ Alkyl, verzweigtem ungesättigtem C₁ bis C₂₀ Alkyl, C₃ bis C₂₀ Cycloalkyl, C₆ bis C₂₀ Aryl, C₇ bis C₂₀ Alkylaryl und C₇ bis C₂₀ Arylalkyl, gegebenenfalls enthaltend ein oder mehrere Heteroatome von Gruppen 14 bis 16 des Perioden-Systems (IUPAC),
R² bis R⁶ gleich oder verschieden voneinander sind und ausgewählt sind aus der Gruppe, bestehend aus Wasserstoff, linearem gesättigtem C₁-C₂₀ Alkyl, linearem ungesättigtem C₁-C₂₀ Alkyl, verzweigtem gesättigtem C₁-C₂₀ Alkyl, verzweigtem ungesättigtem C₁-C₂₀ Alkyl, C₃-C₂₀ Cycloalkyl, C₆-C₂₀ Aryl, C₇-C₂₀ Alkylaryl und C₇-C₂₀ Arylalkyl, gegebenenfalls enthaltend ein oder mehrere Heteroatome von Gruppen 14 bis 16 des Perioden-Systems (IUPAC),
R⁷ und R⁸ gleich oder verschieden voneinander sind und ausgewählt aus der Gruppe, bestehend aus Wasserstoff, linearem gesättigtem C₁ bis C₂₀ Alkyl, linearem ungesättigtem C₁ bis C₂₀ Alkyl, verzweigtem gesättigtem C₁ bis C₂₀ Alkyl, verzweigtem ungesättigtem C₁ bis C₂₀ Alkyl, C₃ bis C₂₀ Cycloalkyl, C₆ bis C₂₀ Aryl, C₇ bis C₂₀ Alkylaryl, C₇ bis C₂₀ Arylalkyl, gegebenenfalls enthaltend ein oder mehrere Heteroatome von Gruppen 14 bis 16 des Perioden-Systems (IUPAC), SiR¹⁰₃, GeR¹⁰₃, OR¹⁰, SR¹⁰ und NR¹⁰₂, wobei
R¹⁰ ausgewählt ist aus der Gruppe, bestehend aus line-arem gesättigtem C₁-C₂₀ Alkyl, linearem ungesättigtem C₁ bis C₂₀ Alkyl, verzweigtem gesättigtem C₁ bis C₂₀ Alkyl, verzweigtem ungesättigtem C₁ bis C₂₀ Alkyl, C₃ bis C₂₀ Cycloalkyl, C₆ bis C₂₀ Aryl, C₇ bis C₂₀ Alkylaryl und C₇ bis C₂₀ Arylalkyl, gegebenenfalls enthaltend ein oder mehrere Heteroatome von Gruppen 14 bis 16 des Perioden-Systems (IUPAC),
und/oder
R⁷ und R⁸ gegebenenfalls Teil eines C₄ bis C₂₀ Kohlenstoff-Ring-Systems zusammen mit den Indenyl-Kohlenstoffen, an die sie gebunden sind, sind, gegebenenfalls kann ein Kohlenstoff-Atom durch ein Stickstoff-, Schwefel- oder Sauerstoff-Atom substituiert sein,
R⁹ gleich oder verschieden voneinander sind und ausgewählt sind aus der Gruppe, bestehend aus Wasserstoff, linearem gesättigtem C₁ bis C₂₀ Alkyl, linearem ungesättigtem C₁ bis C₂₀ Alkyl, verzweigtem gesättigtem C₁ bis C₂₀ Alkyl, verzweigtem ungesättigtem C₁ bis C₂₀ Alkyl, C₃ bis C₂₀ Cycloalkyl, C₆ bis C₂₀ Aryl, C₇ bis C₂₀ Alkylaryl, C₇ bis C₂₀ Arylalkyl, OR¹⁰ und SR¹⁰,
wobei R¹⁰ wie vorstehend definiert ist,
L eine zweiwertige Gruppe ist, die die zwei Indenyl-Liganden, ausgewählt aus einer C₂R¹¹₄-Einheit oder einem SiR¹¹₂ oder GeR¹¹₂, überbrückt, wobei R¹¹ ausgewählt ist aus der Gruppe, bestehend aus H, linearem gesättigtem C₁ bis C₂₀ Alkyl, linearem ungesättigtem C₁ bis C₂₀ Alkyl, verzweigtem gesättigtem C₁ bis C₂₀ Alkyl, verzweigtem ungesättigtem C₁ bis C₂₀ Alkyl, C₃ bis C₂₀ Cycloalkyl, C₆ bis C₂₀ Aryl, C₇ bis C₂₀ Alkylaryl oder C₇ bis C₂₀ Arylalkyl, gegebenenfalls enthaltend ein oder mehrere Heteroatome von Gruppen 14 bis 16 des Perioden-Systems (IUPAC), und wobei bevorzugter
(c) die Übergangs-Metall-Verbindung der Formel (I) oder (II) ausgewählt ist aus rac-Methyl-(cyclohexyl)-silandiyl-bis (2-methyl-4-(4-tert-butylphenyl)-indenyl)-zirkoniumdichlorid, rac-Dimethylsilandiyl-bis-(2-methyl-4-phenyl-1,5, 6, 7-tetrahydro-s-indacen-1-yl)-zirkoniumdichlorid und rac-Dimethylsilandiylbis-(2-methyl-4-phenyl-5-methoxy-6-tert-butylindenyl)-zirkoniumdichlorid.

9. Polypropylen-Blend nach einem der vorangehenden Ansprüche, wobei
(a) Komponente (B) einen Polydispersitäts-Index (Mw/Mn) von mindestens 3,0 aufweist,
und/oder
(b) das Polypropylen-Blend einen Polydispersitäts-Index (Mw/Mn) in dem Bereich von 3,0 bis 8,0 aufweist.

10. Verwendung von einem Polypropylen-Blend nach einem der vorangehenden Ansprüche 1 bis 9 zur Herstellung von Ein-Schicht-Rohren oder einer Schicht von einem Mehr-Schicht-Rohr.

11. Rohre, umfassend ein Polypropylen-Blend nach einem der Ansprüche 1 bis 9.

12. Rohre nach Anspruch 11, wobei die Rohre Ein-Schicht-Rohre oder Mehr-Schicht-Rohre sind, wobei mindestens eine Schicht der Mehr-Schicht-Rohre ein Polypropylen-Blend nach einem der Ansprüche 1 bis 9 umfasst.

13. Rohre nach Anspruch 11 oder 12, wobei die Rohre eine Druck-Test-Leistung, gemessen gemäß ISO 1167, aufweisen von
(a) mindestens 400 h bei 5 MPa und 95°C (Rohr-Durchmesser 32 mm; Wand-Dicke 3 mm),
und/oder
(b) mindestens 6000 h bei 3,5 MPa und 95°C (Rohr-Durchmesser 32 mm; Wand-Dicke 3 mm),
und/oder
(c) mindestens 3000 h bei 16 MPa und 20°C (Rohr-Durchmesser 32 mm; Wand-Dicke 3 mm).

## Revendications

1. Mélange de polypropylène comprenant :
(a) un composant (A) qui est un copolymère de propylène et d'une α-oléfine en C₄ à C₁₂, présentant des régio-défauts 2,1, déterminés par spectroscopie RMN-¹³C, à raison de plus de 0,40 %, le composant (A) présentant un MFR2 à 230°C conformément à la norme ISO 1133 de 0,25 à 10 g/10 min, et
(b) un composant (B) qui est un homopolymère ou un copolymère de propylène présentant des régio-défauts 2,1, déterminés par spectroscopie RMN-¹³C, à raison de 0,40 % ou moins,
lequel mélange de polypropylène n'est pas β-nucléé.

2. Mélange de polypropylène selon la revendication 1, comprenant :
(a) un composant (A) qui est un copolymère de propylène et d'une α-oléfine en C₄ à C₁₂ préparé avec un système catalyseur à un seul site, et
(b) un composant (B) qui est un homopolymère ou un copolymère de propylène préparé avec un catalyseur de Ziegler-Natta,
lequel mélange de polypropylène n'est pas β-nucléé.

3. Mélange de polypropylène selon la revendication 1, dans lequel le composant (A) est préparé avec un système catalyseur à un seul site et/ou le composant (B) est préparé avec un catalyseur de Ziegler-Natta.

4. Mélange de polypropylène selon l'une quelconque des revendications 1 à 3, dans lequel le composant (B) présente un MFR2 à 230°C conformément à la norme ISO 1133 de 0,03 à 10 g/10 min, de préférence de 0,03 à 4,0 g/10 min, plus préférablement de 0,03 à 2,0 g/10 min.

5. Mélange de polypropylène selon l'une quelconque des revendications précédentes, dans lequel le rapport en poids du composant (A) sur le composant (B) est de 5/95 à 95/5, de préférence de 8/92 à 92/8, plus préférablement de 10/90 à 90/10.

6. Mélange de polypropylène selon l'une quelconque des revendications précédentes, dans lequel
(a) le composant (A) présente des régio-défauts 2,1, déterminés par spectroscopie RMN-¹³C, à raison de plus de 0,40 %, de préférence des régio-défauts 2,1, en particulier des régio-défauts érythro 2,1, à raison de 0,60 % ou plus, plus préférablement présente des régio-défauts 2,1, en particulier des régio-défauts érythro 2,1, à raison de 0,70 % ou plus,
et/ou
(b) le composant (B) possède des régio-défauts 2,1, déterminés par spectroscopie RMN-¹³C, à raison de 0,30 % ou moins, de préférence des régio-défauts 2,1 à raison de 0,20 % ou moins.

7. Mélange de polypropylène selon l'une quelconque des revendications précédentes, dans lequel
(a) le composant (A) présente une teneur en comonomères de 1 % en moles ou plus, de préférence de 1,5 % en moles ou plus, plus préférablement de 2 % en moles ou plus, et/ou
(b) les comonomères du composant (A) sont choisis parmi les α-oléfines en C₄ à C₁₀, de préférence les α-oléfines en C₄ à C₈, plus préférablement les α-oléfines en C₄ à C₆, et/ou
(c) le composant (B) est un homopolymère de propylène.

8. Mélange de polypropylène selon l'une quelconque des revendications précédentes, dans lequel
(a) le composant (A) a été produit en présence d'un système catalyseur à un seul site comprenant un composé de métal de transition de formule (I)
Rₙ(Cp')₂MX₂ (I)
dans laquelle
"M" est le zirconium ou le hafnium,
chaque "X" est indépendamment un ligand σ anionique monovalent,
chaque "Cp'" est un ligand organique de type cyclopentadiényle indépendamment choisi dans l'ensemble constitué par cyclopentadiényle substitué, indényle substitué, tétrahydroindényle substitué, et fluorényle substitué ou non substitué, lesdits ligands organiques se coordonnant au métal de transition (M),
"R" est un groupe pontant divalent liant lesdits ligands organiques (Cp'),
"n" vaut 1 ou 2, de préférence 1,
éventuellement en combinaison avec un cocatalyseur (Co) comprenant un élément (E) du Groupe 13 du Tableau Périodique (IUPAC), et de préférence
(b) le composé de métal de transition est de formule (II) 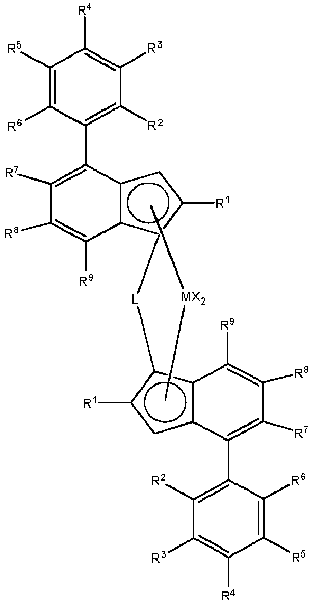 dans laquelle
M est le zirconium ou le hafnium,
les X sont des ligands avec une liaison σ au métal "M", tels que définis à propos de la formule (I),
les R¹ sont identiques ou différents et sont choisis dans l'ensemble constitué par les radicaux alkyle en C₁ à C₂₀ saturés linéaires, alkyle en C₁ à C₂₀ insaturés linéaires, alkyle en C₁ à C₂₀ saturés ramifiés, alkyle en C₁ à C₂₀ insaturés ramifiés, cycloalkyle en C₃ à C₂₀, aryle en C₆ à C₂₀, alkylaryle en C₇ à C₂₀, et arylalkyle en C₇ à C₂₀, contenant éventuellement un ou plusieurs hétéroatome(s) des Groupes 14 à 16 du Tableau Périodique (IUPAC),
R² à R⁶ sont identiques ou différents et sont choisis dans l'ensemble constitué par l'hydrogène et les radicaux alkyle en C₁ à C₂₀ saturés linéaires, alkyle en C₁ à C₂₀ insaturés linéaires, alkyle en C₁ à C₂₀ saturés ramifiés, alkyle en C₁ à C₂₀ insaturés ramifiés, cycloalkyle en C₃ à C₂₀, aryle en C₆ à C₂₀, alkylaryle en C₇ à C₂₀, et arylalkyle en C₇ à C₂₀, contenant éventuellement un ou plusieurs hétéroatome(s) des Groupes 14 à 16 du Tableau Périodique (IUPAC),
R⁷ et R⁸ sont identiques ou différents et sont choisis dans l'ensemble constitué par l'hydrogène et les radicaux alkyle en C₁ à C₂₀ saturés linéaires, alkyle en C₁ à C₂₀ insaturés linéaires, alkyle en C₁ à C₂₀ saturés ramifiés, alkyle en C₁ à C₂₀ insaturés ramifiés, cycloalkyle en C₃ à C₂₀, aryle en C₆ à C₂₀, alkylaryle en C₇ à C₂₀, et arylalkyle en C₇ à C₂₀, contenant éventuellement un ou plusieurs hétéroatome(s) des Groupes 14 à 16 du Tableau Périodique (IUPAC), SiR¹⁰₃, GeR¹⁰₃, OR¹⁰, SR¹⁰ et NR¹⁰₂,
où R¹⁰ est choisi dans l'ensemble constitué par les radicaux alkyle en C₁ à C₂₀ saturés linéaires, alkyle en C₁ à C₂₀ insaturés linéaires, alkyle en C₁ à C₂₀ saturés ramifiés, alkyle en C₁ à C₂₀ insaturés ramifiés, cycloalkyle en C₃ à C₂₀, aryle en C₆ à C₂₀, alkylaryle en C₇ à C₂₀, et arylalkyle en C₇ à C₂₀, contenant éventuellement un ou plusieurs hétéroatome(s) des Groupes 14 à 16 du Tableau Périodique (IUPAC),
et/ou
R⁷ et R⁸ font éventuellement partie d'un système cyclique carboné en C₄ à C₂₀ conjointement avec les carbones d'indényle auxquels ils sont rattachés, un atome de carbone pouvant éventuellement être remplacé par un atome d'azote, de soufre ou d'oxygène,
les R⁹ sont identiques ou différents et sont choisis dans l'ensemble constitué par l'hydrogène et les radicaux alkyle en C₁ à C₂₀ saturés linéaires, alkyle en C₁ à C₂₀ insaturés linéaires, alkyle en C₁ à C₂₀ saturés ramifiés, alkyle en C₁ à C₂₀ insaturés ramifiés, cycloalkyle en C₃ à C₂₀, aryle en C₆ à C₂₀, alkylaryle en C₇ à C₂₀, arylalkyle en C₇ à C₂₀, OR¹⁰, et SR¹⁰,
où R¹⁰ est tel que défini ci-dessus,
L est un groupe divalent pontant les deux ligands indényle, choisi parmi un motif C₂R¹¹₄, SiR¹¹₂ et GeR¹¹₂,
où R¹¹ est choisi dans l'ensemble constitué par H et les radicaux alkyle en C₁ à C₂₀ saturés linéaires, alkyle en C₁ à C₂₀ insaturés linéaires, alkyle en C₁ à C₂₀ saturés ramifiés, alkyle en C₁ à C₂₀ insaturés ramifiés, cycloalkyle en C₃ à C₂₀, aryle en C₆ à C₂₀, alkylaryle en C₇ à C₂₀, et arylalkyle en C₇ à C₂₀, contenant éventuellement un ou plusieurs hétéroatome(s) des Groupes 14 à 16 du Tableau Périodique (IUPAC), et plus préférablement (c) le composé de métal de transition de formule (I) ou (II) est choisi parmi le dichlorure de rac-méthyl(cyclohexyl)silanediyl-bis(2-méthyl-4-(4-tert-butylphényl)indényl)zirconium, le dichlorure de rac-diméthylsilanediyl-bis(2-méthyl-4-phényl-1,5,6,7-tétrahydro-s-indacén-1-yl)zirconium et le dichlorure de rac-diméthylsilanediyl-bis(2-méthyl-4-phényl-5-méthoxy-6-tert-butylindényl)zirconium.

9. Mélange de polypropylène selon l'une quelconque des revendications précédentes, dans lequel
(a) le composant (B) présente un indice de polydispersité (Mw/Mn) d'au moins 3,0,
et/ou
(b) le mélange de polypropylène présente un indice de polydispersité (Mw/Mn) situé dans la plage allant de 3,0 à 8,0.

10. Utilisation d'un mélange de polypropylène selon l'une quelconque des revendications 1 à 9 pour la fabrication de tuyaux monocouches ou d'une couche d'un tuyau multicouche.

11. Tuyaux comprenant un mélange de polypropylène selon l'une quelconque des revendications 1 à 9.

12. Tuyaux selon la revendication 11, lesquels tuyaux sont des tuyaux monocouches ou multicouches, dans lesquels au moins une couche des tuyaux multicouches comprend un mélange de polypropylène selon l'une quelconque des revendications 1 à 9.

13. Tuyaux selon la revendication 11 ou 12, lesquels tuyaux présentent une performance de test de pression, mesurée conformément à la norme ISO 1167,
(a) d'au moins 400 h sous 5 MPa et à 95°C (diamètre de tuyau 32 mm ; épaisseur de paroi 3 mm),
et/ou
(b) d'au moins 6000 h sous 3,5 MPa et à 95°C (diamètre de tuyau 32 mm ; épaisseur de paroi 3 mm),
et/ou
(c) d'au moins 3000 h sous 16 MPa et à 20°C (diamètre de tuyau 32 mm ; épaisseur de paroi 3 mm).
